# EUROPÄISCHE PATENTSCHRIFT

(11) **EP 2 126 521 B1**
(45) Veröffentlichungstag und Bekanntmachung des Hinweises auf die Patenterteilung: **27.01.2016**
(21) Anmeldenummer: 08716050.3
(22) Anmeldetag: 26.02.2008
(51) Int. Cl.: G01D 13/04, G01D 13/22

(54) **KONISCH SKALIERTES ANZEIGEINSTRUMENT FÜR EIN KRAFTFAHRZEUG**
CONICALLY GRADUATED DISPLAY INSTRUMENT FOR A MOTOR VEHICLE
INSTRUMENT D'INDICATION À CADRAN CONIQUE DESTINÉ À UN VÉHICULE À MOTEUR

(30) Priorität: 27.02.2007 DE 102007009496; 20.08.2007 DE 102007039327
(43) Veröffentlichungstag der Anmeldung: 02.12.2009
(73) Patentinhaber: Johnson Controls Automotive Electronics GmbH, 75196 Remchingen (DE)
(72) Erfinder: MAYER, Martin, 74889 Sinsheim (DE)
(74) Vertreter: Wolff, Felix
(86) Internationale Anmeldenummer: PCT/EP2008/001511
(87) Internationale Veröffentlichungsnummer: WO 2008/104365

(56) Entgegenhaltungen:
- WO-A-2004/102127
- DE-A1- 3 149 826
- DE-A1- 4 321 146
- DE-A1- 19 737 679
- DE-A1- 19 831 893
- DE-U1- 20 021 111
- FR-A- 2 871 230

## Beschreibung

Die vorliegende Erfindung betrifft ein Zeigerinstrument mit einer Skalenscheibe und einer Konturierung in deren Randbereich, der eine sichtbare Oberfläche aufweist, und einem Zeiger. Des Weiteren betrifft die vorliegende Erfindung ein Verfahren zur Herstellung eines Zeigerinstrumentes.

Zeigerinstrumente mit einer dreidimensionalen Konturierung der Sichtfläche sind in vielen Varianten bekannt. Auf dem konturierten Bereich können beispielsweise die Skalenstriche einer Geschwindigkeitsanzeige angeordnet werden. Durch die Konturierung sind diese besonders gut sichtbar. Beispielsweise lehrt DE 197 39 628 A1 ein Anzeigeinstrument, insbesondere für ein Fahrzeug, mit einem auf einer drehbaren Zeigerwelle eines Messwerkes angeordneten Zeiger mit einer Zeigernabe und einer Zeigerfahne. DE 43 21 146 A1 offenbart eine Anzeigeeinheit mit einer zentralen Anzeige und einem Zeigerinstrument, wobei das Zeigerinstrument einen Antrieb, der in Ableserichtung hinter der Anzeige angeordnet ist, eine die Anzeige umgebende Skalenscheibe und einen mittels des Antriebes verschwenkbaren Zeiger aufweist.

Ebenso bekannt sind Zeigerinstrumente, bei denen der Mittelteil der Sichtfläche von beweglichen Komponenten, wie dem Zeiger oder der ihn tragenden Drehachse, freigehalten ist. Z.B. lehrt US 6 817 310 B2 eine mittig geöffnete kreisbogenförmige Anzeigeskala. Dies ist besonders vorteilhaft in den Fällen, in denen ein diesen Mittelteil überwiegend in Anspruch nehmendes weiteres Anzeigeelement, etwa ein Grafikdisplay, dort platziert ist. In diesen Fällen kommt meist einen Hakenzeiger zum Einsatz, der unterhalb der kreisförmigen Sichtfläche gelagert ist bzw. angetrieben wird und die Skalenscheibe von außen umgreift. Bei Zeigerinstrumenten mit einem konturierten Randbereich sind diese Instrumente jedoch nicht herstellbar.

Es war deshalb die Aufgabe der vorliegenden Erfindung ein Zeigerinstrument mit einer Konturierung im Randbereich zur Verfügung zu stellen, das die Nachteile des Standes der Technik nicht aufweist

Gelöst wird die Aufgabe mit einem Zeigerinstrument mit einer Skalenscheibe und einer Konturierung In deren Randbereich, der eine sichtbare Oberfläche aufweist, und mit einem Zeiger, der unterhalb der Skalenscheibe gelagert ist und einen Abschnitt aufweist, der oberhalb der sichtbaren Oberfläche der Konturierung angeordnet ist, wobei der Zeiger sowie die Skalenscheibe und die Konturierung jeweils einstückig ausgeführt sind und die Skalenscheibe und die Konturierung jeweils eine Ausnehmung aufweisen wobei die Ausnehmung der Skalenscheibe im Bereich der Ausnehmung der Konturierung vorgesehen ist..

Erfindungsgemäß weist das Zeigerinstrument eine Skalenscheibe auf, die in der Regel im Wesentlichen plan ist jedoch auch eine dreidimensionale Struktur aufweisen kann. Die Skalenscheibe ist aus Kunststoff, insbesondere aus einer Kunststofffolie gefertigt. Die Skalenscheibe kann im Randbereich Markierungen, wie Beispielsweise Stricht und/oder Zahlen aufweisen, die, in Zusammenspiel mit einem Zeiger, dem Betrachter Informationen beispielsweise über eine Geschwindigkeit, eine Drehzahl, eine Temperatur, einen Öldruck oder dergleichen geben. Die Skalenscheibe kann zusätzlich Symbole aufweisen, die dem Betrachter der Skalenscheibe Informationen über den Zustand beispielsweise eines Kraftfahrzeuges gibt.

Weiterhin erfindungsgemäß weist das Zeigerinstrument im Randbereich der Skalenscheibe eine Konturierung auf. Diese Konturierung weist eine für den Betrachter sichtbare Oberfläche auf. Die Skalenscheibe und die Konturierung können einstückig und beispielsweise durch Tiefziehen einer Folie oder durch Spritzgießen erzeugt worden sein. Die Konturierung kann aber auch ein eigenständiges Bauteil sein, das an der Skalenscheibe angeordnet bzw. angeklebt ist. Die Konturierung verjüngt sich von deren Rand in Richtung der Skalenscheibe. Die Konturierung ist ein Kreisring oder ein Kreisringsegment, insbesondere ein sich in Richtung der Mitte der Skalenscheibe konisch verjüngender Kreisring oder Kreisringsegment. Auf der sichtbaren Oberfläche der Konturierung können Skalenstricht, Zahlen oder dergleichen angeordnet sein.

Außerdem weist das Zeigerinstrument einen Zeiger auf, der mit einem Ende unterhalb der Skalenscheibe gelagert ist, der jedoch einen Abschnitt, insbesondere im Bereich des nicht gelagerten Endes aufweist, der oberhalb der Oberfläche der Konturierung angeordnet ist. Dieser Bereich wird auch als Zeigerfahne bezeichnet. Dieser Abschnitt verläuft im Wesentlichen parallel zu der Oberfläche der Konturierung und/oder ist in einem geringen Abstand zu der Oberfläche angeordnet. Beide Ausführungsformen der vorliegenden Erfindung verbessern die Ablesegenauigkeit des Zeigerinstrumentes. Der Zeiger ist zumindest teilweise als Lichtleiter gestaltet. Das Licht wird in der Zeigerfahne ausgekoppelt und beleuchtet diese. Die Übergänge weisen zwischen den Bereich Winkel < 90° und/oder Radien auf, um möglichst viel Licht durch den Zeiger zu leiten. Alternativ oder zusätzlich kann der Zeiger in den Ecken ein Reflektionsfläche aufweist, die in einem Winkel von 45° zu den benachbarten Flächen angeordnet ist. Der Zeiger ist aus einem lichtleitenden Kunststoff gefertigt, der verformbar und/oder lichtleitend ist. Der Kunststoff weist eine Metallseele auf, die den Zeiger in seiner jeweiligen Form stabilisiert. In einer alternativen Ausführungsform besteht der Zeiger aus mehreren Einzelteilen, die miteinander verbunden werden.

Die Konturierung weist eine Ausnehmung auf. Die Konturierung erstreckt sich demnach nicht im ganzen Randbereich, sondern nur in einem Teilbereich des Randes. Die Ausnehmung kann in die Konturierung eingeformt oder nachträglich eingearbeitet werden.

Weiterhin weist die Skalenscheibe eine Ausnehmung auf. Diese Ausnehmung ist im Bereich der Ausnehmung der Konturierung angeordnet. Die Ausnehmung kann in die Skalenscheibe eingeformt oder nachträglich eingearbeitet werden.

Die Konturierung und/oder die Skalenscheibe sind teilweise von einer Sichtblende abgedeckt. Die Abdeckung erfolgt im Bereich der Ausnehmung der Konturierung und/oder der Skalenscheibe.

Der Zeiger wird durch einen Antrieb, insbesondere einen Elektromotor, angetrieben, der unterhalb der Skalenscheibe angeordnet ist.

Das erfindungsgemäße Zeigerinstrument eignet sich insbesondere als Anzeige in einem Kraftfahrzeug, beispielsweise zur Geschwindigkeits-, Drehzahl-, Temperatur-, oder Öldruckanzeige. Ein weiterer Gegenstand der vorliegenden Erfindung ist deshalb ein Kraftfahrzeug aufweisend das erfindungsgemäße Zeigerinstrument.

Ein zusätzlicher Gegenstand der vorliegenden Erfindung ist ein Verfahren zur Montage eines Zeigerinstrumentes, das
- eine Skalenscheibe und eine Konturierung, wobei die Konturierung mit einer Ausnehmung versehen ist, und
- einen Zeiger, der über einen langestreckten Bereich, mit dem er an einem Antrieb befestigt ist, und an seiner Spitze über einen gebogenen Bereich verfügt, aufweist,
wobei der Zeiger vom Rand der Skalenscheibe im Bereich der Ausnehmung in Richtung der Mitte der Skalenscheibe geführt und dann in den Bereich der Konturierung verdreht wird, wobei die Skalenscheibe eine Ausnehmung aufweist, die im Bereich der Ausnehmung angeordnet ist, undder gebogene Bereich von unten durch die Ausnehmung der Skalenscheibe geführt und dann in den Bereich der Konturierung verdreht wird.

Die zu dem Zeigerinstrument gemachten Ausführungen gelten für die erfindungsgemäßen Verfahren gleichermaßen.

Der Zeiger wird mit einem Antrieb, insbesondere einem Elektromotor verbunden.

Im Folgenden werden die Erfindungen anhand der Figuren 1 - 3 erläutert. Diese Erläuterungen sind lediglich beispielhaft und schränken den allgemeinen Erfindungsgedanken nicht ein. Die Erläuterungen gelten für alle Erfindungsgegenstände gleichermaßen.
- Figur 1: zeigt das erfindungsgemäße Zeigerinstrument in Schnittdarstellung
- Figur 2: zeigt die Skalenscheibe mit einem Symbol und anderen Informationsanzeigen
- Figur 3: zeigt ein Verfahren zur Zeigermontage

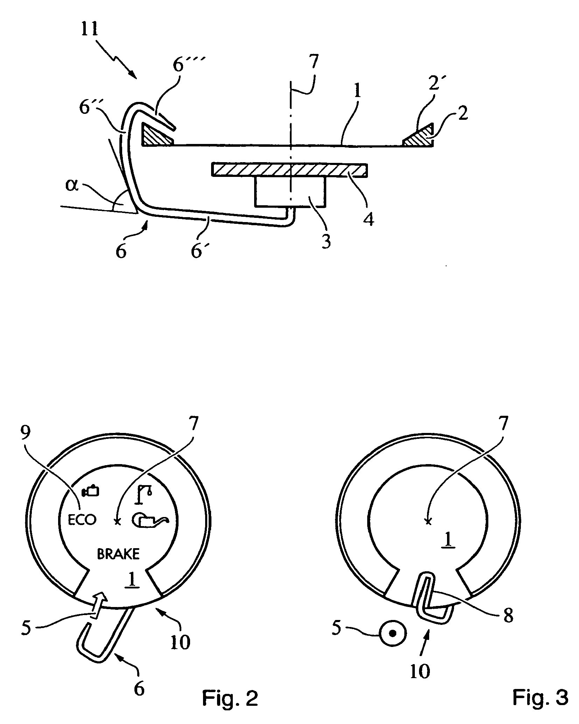

Figur 1 zeigt das erfindungsgemäße Zeigerinstrument 11, das eine Skalenscheibe 1 aufweist. Im Randbereich der Skalenscheibe ist eine Konturierung 2, in dem vorliegenden Fall ein sich zur Mitte 7 hin verjüngendes konisches Kreissegment, angeordnet. Unterhalb der Skalenscheibe befindet sich ein Halter 4 und ein Motor 3. Der Motor 3 ist mit dem einen Ende eines Zeigers 6 verbunden, dessen anderes Ende oberhalb der Konturierung 2 des Zeigerinstruments angeordnet ist. Der Zeiger besteht aus einem im wesentlichen horizontalen Abschnitt 6', einem im wesentlichen vertikalen oder in einem Winkel zur Vertikalen angeordnete Abschnitt 6" sowie einem Abschnitt 6"', der sich oberhalb der Oberfläche 2' der Konturierung befindet. Der Abschnitt 6'" verläuft im wesentlichen parallel zu der Oberfläche 2' der Konturierung und/oder weist einen vergleichsweise geringen Abstand zu dieser auf. Der Winkel α zwischen dem Abschnitt 6' und dem Abschnitt 6" beträgt weniger als 90°. Die Skalenscheibe und/oder die Konturierung können Skalenstriche und/oder Zahlen aufweisen, mit den es in Zusammenspiel insbesondere mit dem Abschnitt 6'" des Zeigers 6 möglich ist beispielsweise eine Geschwindigkeit oder dergleichen abzulesen. Der Übergang zwischen den Abschnitten 6" und 6'" ist als Radius gestaltet. Diese Ausführungsform hat den Vorteil, dass, sofern der Zeiger als Lichtleiter gestaltet ist, möglichst viel Licht in die Zeigerfahne 6'" gelangt. Das erfindungsgemäße Zeigerinstrument ist Bestandteil des Armaturenbrettes eines Kraftfahrzeuges. Der Zeiger 6, die Konturierung 2 und/oder die Skalenscheibe 1 können beleuchtet sein. Des Weiteren kann die Skalenscheibe, wie in Figur 2 dargestellt, Symbole 9 aufweisen, mit denen dem Fahrzeuginsassen weitere Informationen Über den Zustand des Fahrzeuges wie beispielsweise Tankfüllung, Batterieladung, Bremsverschleiß, diverse Displayanzeigen und/oder dergleichen angezeigt werden kann. Aus Figur 2 ist weiterhin ersichtlich, dass die Konturierung 2 eine Ausnehmung 10 aufweist, in der sie unterbrochen ist. In dem vorliegenden Fall ist die Skalenscheibe 1 eine Folie, in deren Randbereich die Konturierung angeklebt ist und somit der Skalenscheibe eine zusätzliche Stabilität verleiht. Es ist jedoch auch möglich, die Skalenscheibe und die Konturierung einstückig beispielsweise durch Tiefziehen einer Folie herzustellen. Auch die Konturierung 2 kann zusätzlich oder anstelle der Skalierung der Skalenscheibe Skalenstriche oder Zahlen aufweisen.

In Figur 3 ist ein Montageverfahren des erfindungsgemäßen Zeigerinstruments dargestellt. Das Zeigerinstrument weist eine weitere Ausnehmung 8 auf, die in der Skalenscheibe 1 im Bereich der Ausnehmung 10 angeordnet ist. Diese Ausnehmung 8 kann bereits beim Herstellen der Skalenscheibe eingeformt oder nachträglich eingearbeitet werden. Durch diese Ausnehmung 8 wird der Abschnitt 6'" des Zeigers 6 geführt und so dann der Zeiger mit der Halterung 4 und/oder dem Motor 3 verbunden. Nach der Verbindung kann der Zeiger im oder gegen den Uhrzeigersinn verdreht werden, so dass der Abschnitt6'" die Konturierung 2 überdeckt. Der Zeiger 6 und der Motor 3 können als Einheit vormontiert und der Zeiger dann durch die Ausnehmung in Position gebracht werden. Die Ausnehmung 8 kann sodann durch eine Blende abgedeckt werden.

### Bezugszelchenliste:

- 1: Skalenscheibe
- 2: Konturierung, Ring
- 2': sichtbare Oberfläche der Konturierung
- 3: Antrieb, Motor
- 4: Halterung für den Antrieb
- 5: Montagerichtung des Zeigers
- 6: Zeiger
- 6': erster Abschnitt des Zeigers
- 6": zweiter Abschnitt des Zeigers
- 6'": dritter Abschnitt des Zeigers, Zeigerfahne
- 7: Mitte der Skalenscheibe
- 8: Ausnehmung in der Skalenscheibe
- 9: Symbole
- 10: Ausnehmung in der Konturierung
- 11: Zeigerinstrument
- α: Winkel zwischen 6' und 6"

## Patentansprüche

1. Zeigerinstrument (11) mit einer Skalenscheibe (1) und einer Konturierung (2) in deren Randbereich, der eine sichtbare Oberfläche (2') aufweist, und einem Zeiger (6), wobei der Zeiger (6) unterhalb der Skalenscheibe (1) gelagert ist und einen Abschnitt (6'") aufweist, der oberhalb der Oberfläche (2') der Konturierung (2) angeordnet ist, **dadurch gekennzeichnet, dass** der Zeiger sowie die Skalenscheibe und die Konturierung jeweils einstückig ausgeführt sind und die Skalenschbeibe (1) und die Konturierung (2) jeweils eine Ausnehmung (8, 10) aufweisen wobei die Ausnehmung (8) der Skalenscheibe im Bereich der Ausnehmung (10) der Konturierung vorgesehen ist.

2. Zeigerinstrument (11) nach Anspruch 1, in welchem der Abschnitt (6'") im Wesentlichen parallel zu der Oberfläche (2') verläuft.

3. Zeigerinstrument (11) nach einem der voranstehenden Ansprüche, in welchem die Konturierung (2) ein Kreisring ist.

4. Zeigerinstrument (11) nach einem der voranstehenden Ansprüche, in welchem auf der Skalenscheibe (1) ein Symbol (9) oder andere Informationsanzeigen angeordnet ist.

5. Zeigerinstrument (11) nach einem der voranstehenden Ansprüche, in welchem die Konturierung und/oder die Skalenscheibe teilweise von einer Sichtblende abgedeckt ist.

6. Anzeige in einem Kraftfahrzeug aufweisend das Zeigerinstrument gemäß einem der voranstehenden Ansprüche.

7. Verfahren zur Montage eines Zeigerinstrumentes (11), das
- eine Skalenscheibe (1) und eine Konturierung (2), wobei die Konturierung mit einer Ausnehmung (10) versehen ist, und
- einen Zeiger, der über einen langestreckten Bereich (6'), mit dem er an einem Antrieb (3) befestigt ist, und an seiner Spitze Über einen gebogenen Bereich (6", 6'") verfügt,
aufweist,
**dadurch gekennzeichnet, dass** der Zeiger (6) vom Rand der Skalenscheibe im Bereich der Ausnehmung (10) in Richtung der Mitte (7) der Skalenscheibe (1) geführt und dann in den Bereich der Konturierung verdreht wird, wobei die Skalenscheibe eine Ausnehmung (8) aufweist, die im Bereich der Ausnehmung (10) angeordnet ist und der gebogene Bereich (6", 6'") von unten durch die Ausnehmung (8) geführt und dann in den Bereich der Konturierung (2) verdreht wird.

8. Verfahren nach Anspruch 7 in welchem der Zeiger mit dem Antrieb (3) verbunden wird.

## Claims

1. Pointer instrument (11) with a graduated dial (1), and with contouring (2) in its edge area that comprises a visible surface (2') and a pointer (6), whereby the pointer (6) is mounted below the graduated dial (1) and comprises a section (6'") that is arranged above the surface (2') of the contouring (2), **characterised in that** the pointer as well as the graduated dial and the contouring are each made from one piece and the graduated dial (1) and the contouring (2) each comprise a recess (8, 10), whereby the recess (8) in the graduated dial is envisaged in the area of the recess (10) in the contouring.

2. Pointer instrument (11) according to claim 1, wherein the section (6'") extends substantially parallel with the surface (2').

3. Pointer instrument (11) according to one of the preceding claims, wherein the contouring (2) is a circular ring.

4. Pointer instrument (11) according to one of the preceding claims, wherein a symbol (9) or other information displays are located on the graduated dial (1).

5. Pointer instrument (11) according to one of the preceding claims, wherein the contouring and/or the graduated dial are partially covered by a screen.

6. Display in a motor vehicle, comprising the pointer instrument according to one of the preceding claims.

7. Method for installing a pointer instrument (11), comprising
- a graduated dial (1) and contouring (2), whereby the contouring is equipped with a recess (10), and
- a pointer fitted to a drive (3) via an elongated area (6') and having an arced area (6", 6'") at its tip,
**characterised in that** the pointer (6) is driven from the edge of the graduated dial in the area of the recess (10) in the direction of the centre (7) of the graduated dial (1), and is then twisted into the area of the contouring, whereby the graduated dial comprises a recess (8) arranged in the area of the recess (10), and the arced area (6", 6'") is driven through the recess (8) and then twisted into the area of the contouring (2).

8. Method according to claim 7, wherein the pointer is connected with the drive (3).

## Revendications

1. Instrument à aiguille (11) avec un cadran gradué (1) et un contourage (2) dans sa zone de bordure qui présente une surface (2') visible, et avec une aiguille (6), ladite aiguille (6) est disposée en dessous dudit cadran gradué (1) et présente une section (6'") qui est disposée en dessus de la surface (2') dudit contourage (2), **caractérisé en ce que** l'aiguille ainsi que le cadran gradué et le contourage sont réalisés d'un seul tenant et ledit cadran gradué (1) et le contourage (2) présente chacun une cavité (8, 10), ladite cavité (8) du cadran gradué est prévue dans la zone de la cavité (10) du contourage.

2. Instrument à aiguille (11) selon la revendication 1, dans lequel la section (6'") s'étend essentiellement en parallèle de la surface (2').

3. Instrument à aiguille (11) selon l'une des revendications précédentes, dans lequel le contourage (2) est une couronne.

4. Instrument à aiguille (11) selon l'une des revendications précédentes, dans lequel un symbole (9) ou une autre information est apposé(e) sur le cadran gradué (1).

5. Instrument à aiguille (11) selon l'une des revendications précédentes, dans lequel le contourage et/ou le cadran gradué est couvert partiellement par un cache.

6. Affichage dans un véhicule automobile présentant l'instrument à aiguille selon l'une des revendications précédentes.

7. Procédé pour le montage d'un instrument à aiguille (11) qui comprend
- un cadran gradué (1) et un contourage (2), ledit contourage présentant une cavité (10) et
- une aiguille qui dispose d'une section (6') étirée avec laquelle elle est fixée à un moteur (3) et d'une section courbée (6", 6'") à son extrémité,
**caractérisé en ce que** l'aiguille (6) est acheminée de la bordure du cadran gradué dans la zone de la cavité (10) vers le centre (7) du cadran gradué (1) puis tournée dans la zone du contourage, ledit cadran gradué présentant une cavité (8) disposée dans la zone de ladite cavité (10) et la section courbée (6", 6'") est acheminée de dessous à travers ladite cavité (8) puis tournée dans la zone du contourage (2).

8. Procédé selon la revendication 7, dans lequel l'aiguille est reliée au moteur (3).
